# FASCICULE DE BREVET EUROPEEN

(11) **EP 2 889 155 B1**
(45) Date de publication et mention de la délivrance du brevet: **13.05.2020**
(21) Numéro de dépôt: 14197759.5
(22) Date de dépôt: 12.12.2014
(51) Int. Cl.: B60B 25/20, B60B 25/08, B60B 25/12

(54) **Jante de roue d'aéronef à talon amovible**
Radfelge eines Luftfahrzeugs mit abnehmbarem Wulst
Aircraft wheel rim with removable flange

(30) Priorité: 31.12.2013 FR 1363744
(43) Date de publication de la demande: 01.07.2015
(73) Titulaire: Safran Landing Systems, 78140 Vélizy-Villacoublay (FR)
(72) Inventeur: Galland, Martial, 78140 Vélizy-Villacoublay (FR); Delayre, Xavier, 78140 Vélizy-Villacoublay (FR); Baldassara, Patrick, 78140 Vélizy-Villacoublay (FR)
(74) Mandataire: Lavialle, Bruno François Stéphane

(56) Documents cités:
- GB-A- 191 103 544
- US-A- 1 365 555
- US-A- 3 529 869

## Description

L'invention concerne une jante de roue d'aéronef à talon amovible, telle que définie dans le préambule de la revendication 1. Une jante de ce type est connue de US 3529869 A.

### ARRIERE-PLAN TECHNOLOGIQUE DE L'INVENTION

On connaît déjà des jantes de roues destinées à recevoir un pneumatique et comprenant deux talons dont l'un est amovible. Ce type de jante comporte une portion externe de révolution portant un premier talon venu de matière avec la jante et un deuxième talon amovible qui est rapporté sur la portion externe et maintenu en position par un jonc immobilisé par une cale. L'agencement de ce type de jante permet de monter un pneumatique en faisant glisser ce dernier autour de la portion externe pour ensuite monter le talon amovible sur la jante de sorte à enfermer les deux bourrelets du pneumatique entre les talons de la jante. La structure de la jante permet ainsi un montage et démontage du pneumatique alors que la jante est fixée sur un essieu, tel qu'un essieu atterrisseur d'aéronef.

Il a été identifié un risque de rotation du talon amovible relativement au reste de la jante, pouvant provoquer une détérioration de l'interface entre les deux éléments, induisant des pertes de performance. Pour diminuer ce risque, le document FR2976216 propose l'utilisation d'un jonc particulier propre à développer des efforts radiaux empêchant la rotation du talon amovible. Il a également été proposé de faire coopérer le talon et le reste de la jante selon une portée non circulaire, assurant ainsi un blocage en rotation du talon amovible. Il a également été proposé dans le document FR2966078 de munir le talon amovible de dents, le blocage angulaire étant obtenu par insertion d'une cale dans l'espace entre deux dents.

Ces blocages angulaires, outre qu'ils sont limités en résistance mécanique, sont onéreux à produire, et difficilement contrôlables par un opérateur.

### OBJET DE L'INVENTION

L'invention a pour objet une jante à talon amovible dont le dispositif d'antirotation du talon amovible est simple et facilement contrôlable.

### PRESENTATION DE L'INVENTION

En vue de la réalisation de ce but on propose une jante de roue d'aéronef en deux parties dont une partie principale comportant un moyeu, un voile s'étendant entre le moyeu et une portion externe annulaire destinée à recevoir un pneumatique et conformée pour présenter un talon à l'une de ses extrémités, l'autre de ses extrémités étant conformée pour recevoir une partie amovible formant talon qui est rapportée sur la portion externe annulaire après mise en place du pneumatique, la jante comportant des moyens de blocage en rotation du talon amovible relativement à la jante. Selon l'invention, les moyens de blocage en rotation comportent au moins une biellette ayant une première extrémité attelée à la partie principale, et une deuxième extrémité attelée à la partie amovible, les extrémités ayant des centres qui définissent un axe qui s'étend dans un plan perpendiculaire à un axe de rotation de la jante tout en s'étendant obliquement pour faire un angle par rapport à une direction radiale.

Ainsi, le talon amovible et la partie principale de la jante peuvent coopérer selon des surfaces annulaires très simples à produire, tandis que le blocage en rotation est obtenu par l'interposition d'une biellette qui reste très visible de l'extérieur, ce qui facilite l'inspection de la jante.

### BREVE DESCRIPTION DES DESSINS

L'invention sera mieux comprise à la lumière de la description qui suit de divers modes particuliers de réalisation de l'invention, en référence aux figures des dessins annexés, parmi lesquelles :
- la figure 1 est une vue en coupe d'une jante à talon amovible selon un premier mode particulier de réalisation de l'invention ;
- la figure 2 est une vue en perspective de la jante de la figure 1 ;
- la figure 3 est une vue de détail éclatée de la jante de la figure 2 ;
- les figures 4 à 7 sont des schémas de principes illustrant divers modes de réalisation de l'invention.

### DESCRIPTION DETAILLEE DE MODES DE REALISATION PARTICULIERS DE L'INVENTION

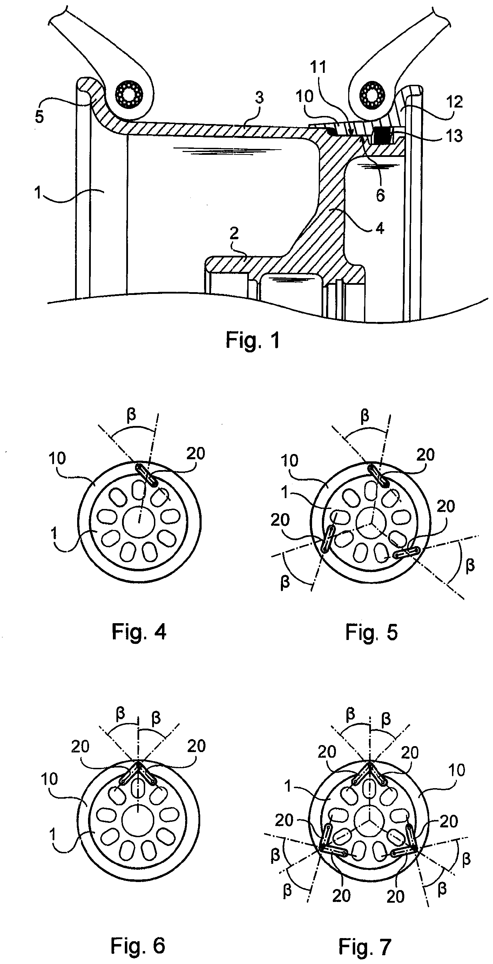

En référence à la figure 1, l'invention s'applique à des jantes comportant une partie principale 1 qui comprend un moyeu 2 adapté à recevoir des roulements de guidage en rotation (non représentés) autour d'un axe de rotation X, et une portion annulaire externe 3 reliée au moyeu 2 par un voile 4. L'une des extrémités axiales de la portion annulaire externe 3 est conformée en un talon 5 tandis que l'autre extrémité est conformée en surface de centrage 6 d'une partie auxiliaire amovible 10 de forme généralement annulaire qui possède une surface de centrage 11 et une extrémité conformée en talon 12. Ici, les surfaces de centrage 6 et 11 sont de révolution. De façon connue en soi, la partie auxiliaire amovible 10 est rapportée sur la partie principale 1 après mise en place d'un pneumatique sur la portion annulaire externe 3, comme représenté. Un jonc 13 est ensuite interposé entre la partie principale 1 et la partie auxiliaire amovible 10 pour solidariser axialement ces deux parties l'une à l'autre.

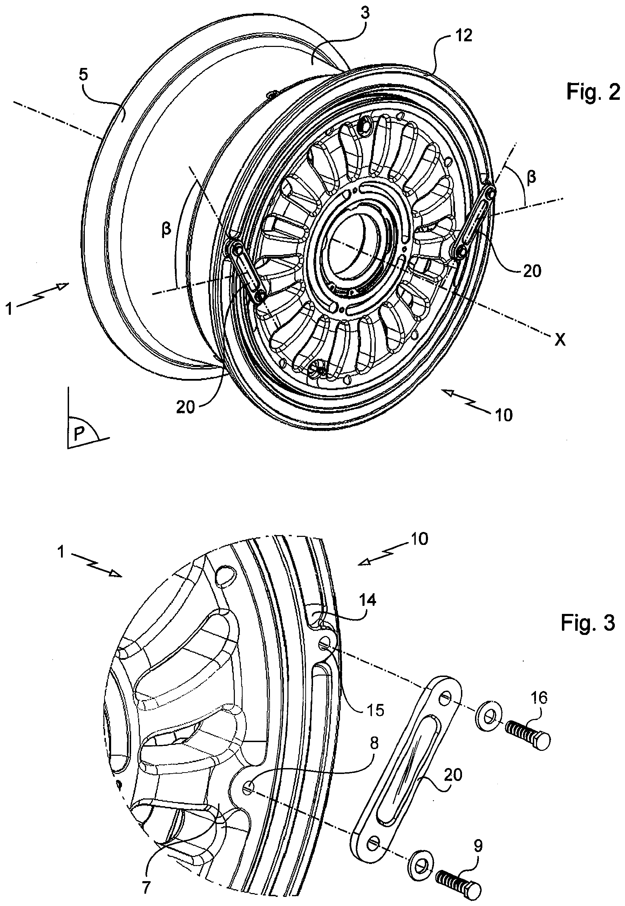

Selon l'invention, et comme cela est visible aux figures 2 et 3, la partie principale 1 comporte des réservations 7 dans chacune desquelles un orifice 8 a été ménagé selon une direction axiale. De même, le talon amovible 10 comporte des réservations 14 dans chacune desquelles un orifice 15 a été ménagé selon une direction axiale. Les orifices 7, 14 adjacents reçoivent des organes de fixation 9 et 16 des extrémités d'une biellette 20. Ici, chacune des biellettes 20 est découpée dans un plat en métal.

L'axe défini par les centres des extrémités de la biellette 20 s'étend ici sensiblement dans un plan P perpendiculaire à l'axe X, et selon une direction faisant un angle β non nul par rapport à une direction radiale. De préférence, l'angle β est compris entre 45 et 90 degrés. Ainsi disposé, chaque biellette 20 joue le rôle d'arrêt en rotation du talon amovible 10 sur la partie principale 11, et est parfaitement visible de l'extérieur, de sorte que le contrôle de sa présence est facilité.

La jante est ici équipée de deux biellettes 20 montées dans des régions diamétralement opposées, et faisant des angles opposés avec des directions radiales.

Les figures 4 à 7 montrent des variantes de réalisation de l'invention. A la figure 4, La jante est équipée d'une seule biellette 20. A la figure 5, la jante est équipée de trois biellettes 20 régulièrement réparties, et présentant toutes le même angle β par rapport à des directions radiales. Sur la figure 6, la jante comporte deux biellettes 20 qui convergent par leurs extrémités liées à la partie auxiliaire amovible 10, en étant associées à un organe de fixation commun. Sur la figure 7, le schéma à deux biellettes convergentes de la figure 6 a été répété trois fois.

L'invention n'est pas limitée à ce qui vient d'être décrit, mais englobe au contraire toute variante entrant dans le cadre défini par les revendications.

## Revendications

1. Jante de roue d'aéronef en deux parties dont une partie principale (1) comportant un moyeu (2), un voile (4) s'étendant entre le moyeu et une portion externe annulaire (3) destinée à recevoir un pneumatique et conformée pour présenter un talon (5) à l'une de ses extrémités, l'autre de ses extrémités étant conformée pour recevoir une partie amovible (10) formant talon (12) qui peut être rapportée sur la portion externe annulaire après mise en place du pneumatique, la jante comportant des moyens de blocage en rotation du talon amovible relativement à la jante, **caractérisée en ce que** les moyens de blocage en rotation comportent au moins une biellette (20) ayant une première extrémité attelée à la partie principale, et une deuxième extrémité attelée à la partie amovible, les extrémités ayant des centres qui définissent un axe qui s'étend dans un plan perpendiculaire à un axe de rotation de la jante tout en s'étendant obliquement, c'est à dire ne croissant pas leditaxe de rotation, pour faire un angle (β) par rapport à une direction radiale de la jante.

2. Jante de roue d'aéronef selon la revendication 1, dans laquelle la partie principale et la partie auxiliaire amovible comportent des réservations (7,14) dans lesquelles sont ménagés des orifices (8, 15) adaptés à recevoir des organes de fixation (9,16) des extrémités de la biellette.

3. Jante de roue d'aéronef selon la revendication 1, comportant au moins deux biellettes (20) disposées pour présenter des angles opposés par rapport à des directions radiales.

4. Jante de roue d'aéronef selon la revendication 3, dans laquelle les deux biellettes (20) sont montées dans des régions diamétralement opposées de la jante.

5. Jante de roue d'aéronef selon la revendication 1, dans laquelle la biellette (20) est découpée dans un plat en métal.

## Patentansprüche

1. Luftfahrzeugradfelge aus zwei Teilen, darunter einem Hauptteil (1), der eine Nabe (2) umfasst, eine Radscheibe (4), die sich zwischen der Nabe und einem ringförmigen äußeren Abschnitt (3) erstreckt, der dazu bestimmt ist, einen Reifen aufzunehmen, und der so geformt ist, dass er an einem seiner Enden einen Vorsprung (5) aufweist, wobei das andere seiner Enden so geformt ist, dass es einen einen Vorsprung (12) bildenden lösbaren Teil (10) aufnimmt, der nach dem Platzieren des Reifens an dem ringförmigen äußeren Abschnitt befestigt werden kann, wobei die Felge Drehblockierungsmittel zur Drehblockierung des lösbaren Vorsprungs relativ zu der Felge umfasst, **dadurch gekennzeichnet, dass** die Drehblockierungsmittel mindestens eine Stange (20) umfassen, die ein erste Ende hat, das an den Hauptteil gekoppelt ist, sowie ein zweites Ende, das an den lösbaren Teil gekoppelt ist, wobei die Enden Mittelpunkte haben, die eine Achse definieren, die sich in einer Ebene senkrecht zu einer Drehachse der Felge erstreckt und dabei schrägt verläuft, das heißt die genannte Drehachse nicht schneidet, um einen Winkel (β) in Bezug auf eine radiale Richtung der Felge zu bilden.

2. Luftfahrzeugradfelge nach Anspruch 1, bei der der Hauptteil und der lösbare Hilfsteil Aussparungen (7, 14) umfasst, in denen Öffnungen (8, 15) ausgebildet sind, die geeignet sind, Befestigungselemente (9, 16) zur Befestigung von Enden der Stange aufzunehmen.

3. Luftfahrzeugradfelge nach Anspruch 1, umfassend mindestens zwei Stangen (20), die angeordnet sind, um entgegengesetzte Winkel in Bezug auf radiale Richtungen aufzuweisen.

4. Luftfahrzeugradfelge nach Anspruch 3, bei der die beiden Stangen (20) in diametral entgegengesetzten Bereichen der Felge montiert sind.

5. Luftfahrzeugradfelge nach Anspruch 1, bei der die Stange (20) aus einer Metallplatte geschnitten ist.

## Claims

1. Aircraft wheel rim in two parts, namely a main part (1) comprising a hub (2), a disc (4) extending between the hub and an annular external portion (3) intended to accept a tyre and shaped to have a flange (5) at one end thereof, its other end being shaped to accept a removable part (10) forming a flange (12) that can be attached to the annular external portion after the tyre has been fitted, the rim comprising means for preventing the removable flange from rotating relative to the rim, **characterised in that** the rotation-prevention means comprise at least one link (20) having a first end coupled to the main part and a second end coupled to the removable part, the ends having centres which define an axis which extends in a plane perpendicular to an axis of rotation of the rim while at the same time extending obliquely, that is to say not crossing said rotation axis, to make an angle (β) with respect to a radial direction of the rim.

2. Aircraft wheel rim according to claim 1, in which the main part and the removable auxiliary part comprise reservations (7, 14) in which there are formed orifices (8, 15) suited to accepting fasteners (9, 16) for securing the ends of the link.

3. Aircraft wheel rim according to claim 1, comprising at least two links (20) arranged to be at opposite angles with respect to radial directions.

4. Aircraft wheel rim according to claim 3, in which the two links (20) are mounted in diametrically opposite regions of the rim.

5. Aircraft wheel rim according to claim 1, in which the link (20) is cut from flat metal bar stock.
